# EUROPÄISCHE PATENTSCHRIFT

(11) **EP 1 873 095 B1**
(45) Veröffentlichungstag und Bekanntmachung des Hinweises auf die Patenterteilung: **03.06.2009**
(21) Anmeldenummer: 07008611.1
(22) Anmeldetag: 27.04.2007
(51) Int. Cl.: B65G 59/02, B65H 3/32

(54) **Vorrichtung zum Separieren, insbesondere Abfördern eines Teilstapels mit mindestens einer grossformatigen Platte von einem Reststapel mit einer Mehrzahl grossformatiger Platten**
Device for separating, in particular for removing a partial stack with at least one large format board from the remaining stack with several large format boards
Dispositif de séparation, en particulier d'enlèvement d'une partie de la pile dotée d'au moins une plaque de grand format d'une pile résiduelle dotée de plusieurs plaques de grand format

(30) Priorität: 29.06.2006 DE 102006030152
(43) Veröffentlichungstag der Anmeldung: 02.01.2008
(73) Patentinhaber: HOLZMA Plattenaufteiltechnik GmbH, 75365 Calw-Holzbronn (DE)
(72) Erfinder: Kempf, Martin, 72202 Nagold (DE)
(74) Vertreter: Knapp, Thomas

(56) Entgegenhaltungen:
- EP-A- 0 173 613
- JP-A- 1 236 135
- US-A- 5 242 262

## Beschreibung

Die Erfindung betrifft eine Vorrichtung nach dem Obergriff des Anspruchs 1 sowie ein Verfahren nach dem nebengeordneten Anspruch.

Vom Markt her sind Vorrichtungen der eingangs genannten Art bekannt, welche zum Separieren und Abfördern großformatiger Holzplatten, wie sie beispielsweise bei der Möbelherstellung verwendet werden, dienen. Mit derartigen Vorrichtungen werden Teilstapel eines Gesamtstapels mit einer Vielzahl großformatiger Platten abgefördert und beispielsweise einer Aufteilsäge zugeführt. Um einen Teilstapel von einem Reststapel abzufördern, kann man beispielsweise einerseits den Reststapel in Förderrichtung mittels eines Gegenhalters zurückhalten, und andererseits den Teilstapel mittels eines Schiebers vom Reststapel abschieben.

Auf Grund der großen Flächen der Platten sind jedoch die Haft- und Gleitreibungskräfte zwischen der untersten Platte des Teilstapels und der obersten Platte des Reststapels relativ hoch. Es besteht daher die Gefahr, dass die oberste Platte des Reststapels mit dem Teilstapel mehr oder weniger unkontrolliert mitgeschleppt wird. Beim Abschieben des Teilstapels und dem Zurückhalten des Reststapels mittels eines Gegenhalters kann es außerdem vorkommen, dass die unterste Platte des Teilstapels vom Gegenhalter zurückgehalten und hierdurch beschädigt wird.

US 5,242,262 beschreibt eine Vorrichtung und ein Verfahren zum Separieren von Papierstapeln, mit einem Nagelelement und einem keilförmigen Sicherungselement. EP 0 173 613 A1 beschreibt eine Vorrichtung zum Separieren von Plattenstapeln, bei der Luft auf die Stirnseite des Ausgangsstapels geblasen wird.

Es ist daher die Aufgabe der vorliegenden Erfindung, eine Vorrichtung der eingangs genannten Art zu schaffen, welche ein schnelles, sicheres und präzises Abfördern eines Teilstapels von einem Reststapel ermöglicht.

Diese Aufgabe wird durch eine Vorrichtung mit den Merkmalen des Anspruchs 1 gelöst. Eine weitere Lösung ist in dem nebengeordneten Verfahrensanspruch angegeben. Weiterbildungen der Erfindung finden sich in Unteransprüchen. Außerdem sind für die Erfindung wesentliche Merkmale in der vorliegenden Beschreibung, den Ansprüchen und der Zeichnung enthalten, wobei diese Merkmale in ganz unterschiedlichen Kombinationen für die Erfindung wesentlich sein können, ohne dass hierauf jeweils explizit nochmals hingewiesen wird.

Ein Vorteil der erfindungsgemäßen Vorrichtung und des erfindungsgemäßen Verfahrens ist es, das ohne jede Gefahr einer Beschädigung einer der Platten des Teilstapels und/oder des Reststapels ein Spalt im Sinne einer Trennfuge zwischen der untersten Platte des Teilstapels und der obersten Platte des Reststapels erzeugt werden kann. Eine solcher Spalt führt zumindest örtlich zu einer verbesserten Trennung zwischen Teilstapel und Reststapel, was wiederum die Gefahr eines Mitschleppens der obersten Platte des Reststapels durch den Teilstapel vermindert.

Der von dem Nagelelement erzeugte Spalt kann durch das Trennelement mechanisch abgesichert und vergrößert werden. Dabei wird die Dauer der von dem Nagelelement bzw. der Mehrzahl von Nagelelementen seitlich auf den Teilstapel wirkenden Last reduziert, indem das Nagelelement aus dem Teilstapel wieder herausgezogen und relativ zum Trennelement beispielsweise nach unten bewegt wird. Eine Keilform des Trennelements ist deshalb besonders vorteilhaft, da es hierdurch beim Einschieben den Spalt auf einfache und schonende Weise erweitert.

Vorteilhaft ist dabei eine keilförmig angeschrägte Spitze des Nagelelements, weil bei einer solchen dann, wenn das Nagelelement (zufällig) seitlich nicht in sondern unmittelbar unter die unterste Platte des Teilstapels eingetrieben wird, der Teilstapel bereits etwas angehoben und so etwas vom Reststapel getrennt wird, dabei aber eine Beschädigung der empfindlichen Oberfläche der Unterseite der untersten Platte des Teilstapels und der Oberseite der obersten Platte des Reststapels vermieden wird.

Vorgeschlagen wird ferner, dass der Weg, um den das Nagelelement unter oder in die unterste Platte des Teilstapels eingetrieben werden kann, höchstens ungefähr der Dicke eines Sägeblatts einer der Vorrichtung nachgeschalteten Säge entspricht. Dies ist ein genügender Weg, um den Teilstapel zur Spaltbildung zuverlässig anheben zu können. Gleichzeitig wird genau dieser Bereich des Teilstapels beim späteren Sägeschnitt ohnehin als "Anschnitt" abgesägt und nicht verwendet, so dass in diesem bereich durch das Nagelelement hervorgerufene Beschädigungen, so sie überhaupt auftreten, ohne Bedeutung sind.

Denkbar ist ferner, dass die erfindungsgemäße Vorrichtung eine Mehrzahl von Nagelelementen umfasst, die vorzugsweise in einer Mehrzahl von wenigstens im Wesentlichen horizontalen und zueinander versetzten Reihen angeordnet sind. Damit wird die "Angriffsfläche" größer und damit die Last auf das einzelne Nagelelement und auch den entsprechenden seitlichen Bereich des Teilstapels verteilt bzw. reduziert.

In die gleiche Richtung zielt jene Weiterbildung, bei der die Mehrzahl von Nagelelementen in separaten Gruppen auf jeweiligen Trägerelementen angeordnet sind.

Besonders vorteilhaft ist es, wenn die erfindungsgemäße Vorrichtung eine Kamera zur Erfassung der Trennebene zwischen Teilstapel und Reststapel umfasst, und ein zweites Nagelelement, welches von der Kamera weiter entfernt ist als ein erstes Nagelelement, gegenüber Letzterem etwas höher angeordnet ist. Eine entsprechende Vorrichtung ist in der noch nicht veröffentlichten DE 10 2005 020 977.7 beschrieben. Bei der dort offenbarten Vorrichtung wird über eine Kamera eine Anzahl plattenförmiger Werkstücke innerhalb eines Teilstapels erkannt, und mittels eines Sensors wird die Höhe des Teilstapels ermittelt, dessen Plattenanzahl erfasst wurde. Mit einer solchen Kamera kann ein Teilstapel abgefördert werden, der genauso viele Platten umfasst wie gewünscht. Durch die unterschiedliche vertikale Anordnung des von der Kamera weiter entfernten Nagelelements gegenüber einem zur Kamera näher liegenden Nagelelement wird verhindert, dass durch Wellenbildung oder unterschiedliche Plattendicken von dem entfernt angeordneten Nagelelement noch eine Platte des Reststapels erfasst wird.

Eine weitere vorteilhafte Ausgestaltungen der Vorrichtung besteht darin, dass das Nagelelement und/oder das Trennelement an einem ersten vertikal verschieblichen Schlitten wenigstens mittelbar befestigt ist, der wenigstens zeitweise auf einem zweiten vertikal verschieblichen Schlitten frei aufsitzt, der mit einer Stelleinrichtung gekoppelt ist. Auf diese Weise kann das Nagelelement und/oder das Trennelement exakt nach oben positioniert werden. Wenn aber, aus welchen Gründen auch immer, der Reststapel nach oben gefahren wird, kann sich das Nagelelement und/oder das Trennelement mit dem Reststapel verschieben, ohne dass die Gefahr einer Beschädigung der Oberseite der obersten Platte des Reststapels besteht.

In Weiterbildung hierzu wird vorgeschlagen, dass der erste Schlitten eine schaltbare Koppeleinrichtung aufweist, mittels der er mit einem vertikal verstellbaren Stellelement koppelbar ist. Dies ermöglicht es trotz der zunächst "schwimmenden" vertikalen Lagerung des Nagelelements und/oder des Trennelements, dieses nach dem seitlichen Eintreiben in den Teilstapel bzw. horizontalen Einschieben in den Spalt zwischen Teilstapel und Reststapel vertikal nach oben zu verschieben und damit den Spalt deutlich zu vergrößern. Damit wird das Ergreifen des Reststapels durch eine entsprechende Greifeinrichtung erleichtert. Anschließend kann die Verbindung zwischen dem ersten Schlitten und dem vertikal verstellbaren Stellelement wieder gelöst werden, wodurch im Falle des Trennelements dieses auf die Oberseite des Reststapels "absinkt". So kann das Nagelelement und/oder das Trennelement als "Gegenhalter" wirken, der ein Mitschleppen der obersten Platte des Reststapels beim Abfördern des Teilstapels verhindert.

Besonders günstig ist die Benützung des erzeugten Spalts dann, wenn eine Greifeinrichtung beispielsweise in Form einer Spannzange vorgesehen ist, die in den erzeugten Spalt ein- und am Teilstapel angreift und diesen abfördert. Dabei ist es sogar möglich, dass das Nagelelement im Bereich einer in Förderrichtung gesehen vorderen Stirnseite des Teilstapels und des Reststapels angeordnet ist, also in diesen Bereichen den Spalt erzeugt, und dass die Greifeinrichtung an dem vorderen Rand des Teilstapels angreift und diesen vom Reststapel "herunterzieht". Durch den erzeugten Spalt wird eine schädliche Interaktion zwischen der Greifeinrichtung und einer Rückhalteeinrichtung, die am Reststapel angreift, zuverlässig vermieden. Damit sinkt das Risiko von Beschädigungen ebenso wie das Risiko des Mitschleppens unerwünschter Platten vom Reststapel.

Nachfolgend wird ein besonders bevorzugtes Ausführungsbeispiel der vorliegenden Erfindung unter Bezugnahme auf die beiliegende Zeichnung näher erläutert. In der Zeichnung zeigen:
- Figur 1: eine Ansicht von oben auf eine Vorrichtung zum Abfördern eines Teilstapels von einem Reststapel;
- Figur 2: eine vergrößerte und stärker detaillierte Seitenansicht eines Teilbereichs der Vorrichtung von Figur 1, insbesondere mehrere Nagelelemente und eines keilförmigen Trennelements mit zugehöriger Stelleinrichtung; und
- Figuren 3 bis 11: eine Seitenansicht auf die Vorrichtung von Figur 1 zu verschiedenen Zeitpunkten während eines Abfördervorgangs eines Teilstapels von einem Reststapel.

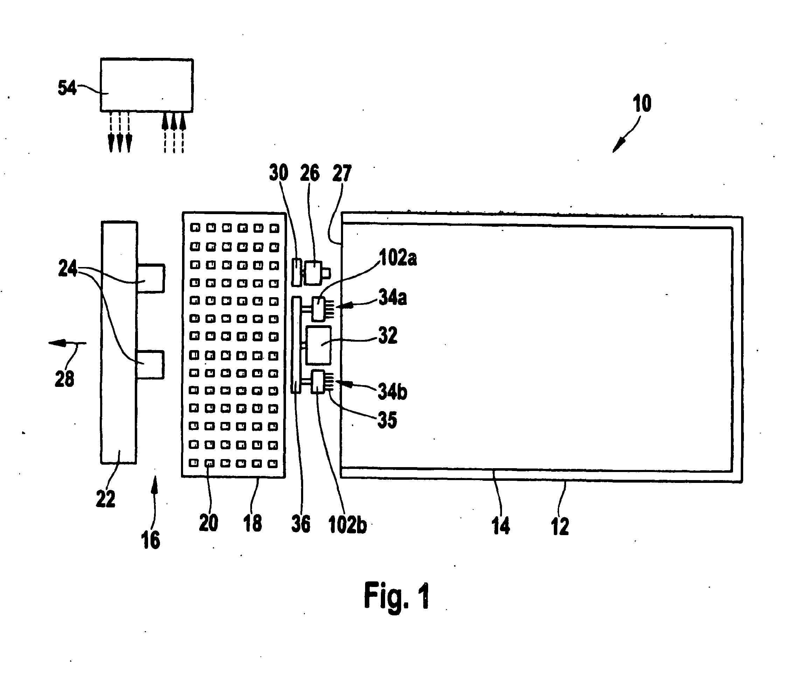

Eine Vorrichtung zum Abfördern eines Teilstapels von einem Reststapel trägt in Figur 1 insgesamt das Bezugszeichen 10. Sie umfasst einen höhenverstellbaren Hubtisch 12, auf dem ein aus Teilstapel und Reststapel bestehender Gesamtstapel 14 einer Mehrzahl großformatiger Platten, wie sie beispielsweise bei der Herstellung von Möbeln verwendet werden, abgelegt ist. Der Teilstapel von Platten kann von einer Fördereinrichtung 16 zu einem Zwischentisch 18 und weiter zu einem nicht dargestellten Arbeitstisch einer Sägeeinrichtung gefördert werden. Der Zwischentisch 18 ist hierzu mit einer Vielzahl von Rollen versehen, von denen in Figur 1 jedoch nur einige dargestellt sind, von denen wiederum nur eine mit dem Bezugszeichen 20 versehen ist.

Die Fördereinrichtung 16 wiederum umfasst einen horizontal und vertikal bewegbaren Förderbalken 22, an dem zum Gesamtstapel 14 hin weisende Spannzangen 24 um eine horizontale Achse schwenkbar befestigt sind. Um einen Teilstapel von einem Reststapel des Gesamtstapels 14 zu separieren (dies wird im Detail weiter unten ausgeführt werden), verfügt die Vorrichtung 10 unter anderem über eine Kamera 26, die auf eine in Förderrichtung (Pfeil 28 in Figur 1) gesehen vordere Stirnseite 27 des Gesamtstapels 14, und dort in etwa auf einen entgegen der Förderrichtung gesehen linken Bereich des Gesamtstapels 14 gerichtet und mit einem nicht gezeigten Bilderkennungssystem verbunden ist. Sie dient, wie weiter unten noch ausgeführt werden wird, zum Abzählen der Platten eines Teilstapels, der abgefördert werden soll.

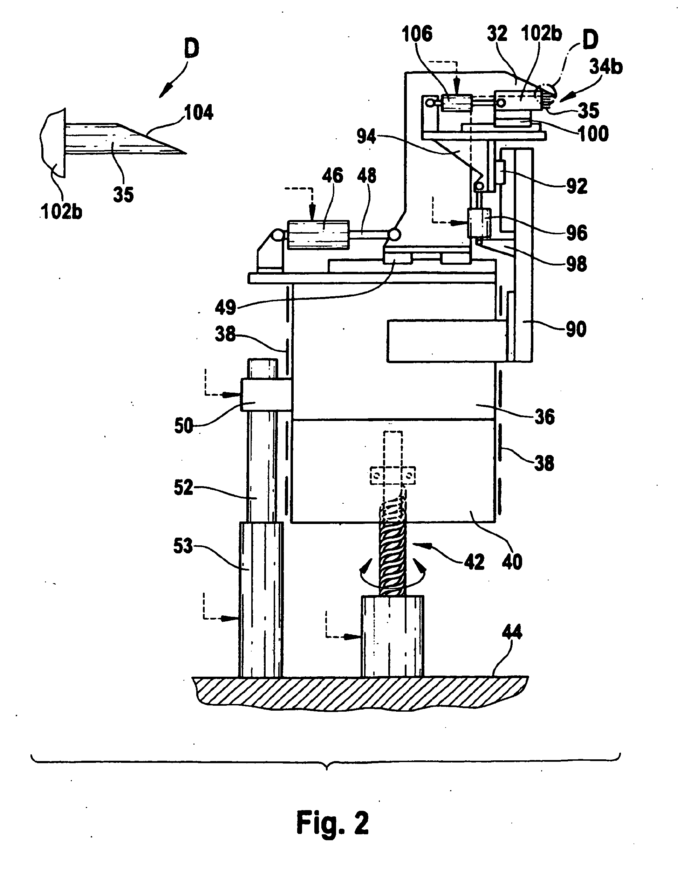

Die Kamera 26 ist hierzu an einem vertikal bewegbaren Schlitten 30 montiert. Ferner verfügt die Vorrichtung 10 über ein zum Gesamtstapel 14 mittig angeordnetes und keilförmiges Trennelement 32 sowie zwei zu beiden Seiten des Trennelements 32 angeordnete Nagelgruppen 34a und 34b, die jeweils mit einer Mehrzahl von in horizontalen und zueinander versetzten Reihen von abragenden Nagelelementen 35 versehen sind (in Figur 1 ist aus Gründen der Übersichtlichkeit nur ein Nagelelement mit dem Bezugszeichen 35 versehen). Die Nagelelemente sind spitz zulaufend und ebenfalls auf die in Förderrichtung 28 gesehen vordere Stirnseite 27 des Gesamtstapels 14 gerichtet. Das Trennelement 32 und die Nagelgruppen 34a und 34b sind an einem ersten Schlitten 36 montiert, wie nun unter Bezugnahme auf Figur 2 erläutert werden wird:
An einem stationären Ständer 38, der in Figur 2 nur durch mehrere vertikale und ein Linearlager andeutende Linien dargestellt ist, ist ein zweiter Schlitten 40 vertikal verschieblich gehalten. Mittels eines Spindelantriebs 42 kann die Höhe des zweiten Schlittens 40 über einem Boden 44 eingestellt werden. Der erste Schlitten 36 ist ebenfalls am Ständer 38 vertikal verschieblich gehalten. In der in Figur 2 dargestellten Betriebssituation sitzt der erste Schlitten 36 auf dem zweiten Schlitten 40 lose auf.

An dem in Figur 2 oberen Ende des ersten Schlittens 36 ist ein horizontaler Pneumatikzylinder 46 befestigt, an dessen Kolbenstange 48 das Trennelement 32 befestigt ist. Dieses ist über eine Linearführung 49 horizontal verschieblich auf dem ersten Schlitten 36 gelagert. Am ersten Schlitten 36 ist eine Koppeleinrichtung 50 befestigt. Diese läuft im Normalfall frei auf einem vertikal verstellbaren Stellelement 52, vorliegend einer Kolbenstange eines vertikal angeordneten Pneumatikzylinders 53. Bei aktivierter Koppeleinrichtung 50 ist der erste Schlitten 36 mit der Kolbenstange 52 starr gekoppelt.

Am ersten Schlitten 36 ist ferner ein sich im Wesentlichen nach oben erstreckendes Lagerstück 90 starr befestigt. An diesem ist über eine Linearführung 92 ein Vertikalschlitten 94 gelagert, an dem ein vertikaler Pneumatikzylinder 96 angreift, der an einem Lagerbock 98 des Lagerstücks 90 gegengelagert ist. Auf dem Vertikalschlitten ist über eine Linearführung 100 ein Horizontalschlitten 102b horizontal verschieblich
gelagert, auf dessen Vorderseite die Nagelgruppe 34b mit den vom Horizontalschlitten 102b horizontal abragenden Nagelelementen 35 angeordnet ist. Insoweit bildet der Horizontalschlitten 102b ein Trägerelement für die Nagelelemente 35. Die Nagelgruppe 34a ist in Figur 2 nicht sichtbar, da von der Nagelgruppe 34b verdeckt. Sie verfügt über einen eigenen Horizontalschlitten 102a (siehe Figur 1), der mit dem Horizontalschlitten 102b starr gekoppelt ist.

Die Nagelelemente 35 der Nagelgruppe 34b sind gegenüber den Nagelelementen.35 der Nagelgruppe 34a im vorliegenden Ausführungsbeispiel vertikal um ungefähr 5mm höher angeordnet. Dieses Maß hängt jedoch von der horizontalen Stapellage ab, bei der es sich im Wesentlichen um eine Materialeigenschaft handelt. Dieses Mal kann also bei anderen Ausführungsbeispielen auch größer sein, beispielsweise 15 mm betragen. Wie aus dem Detail D von Figur 2 ersichtlich ist, weist jedes Nagelelement 35 eine keilförmig angeschrägte Spitze 104 auf. Der Horizontalschlitten 102b ist mit einem horizontal wirkenden Pneumatikzylinder 106 verbunden, der am Vertikalschlitten 94 gegengelagert ist.

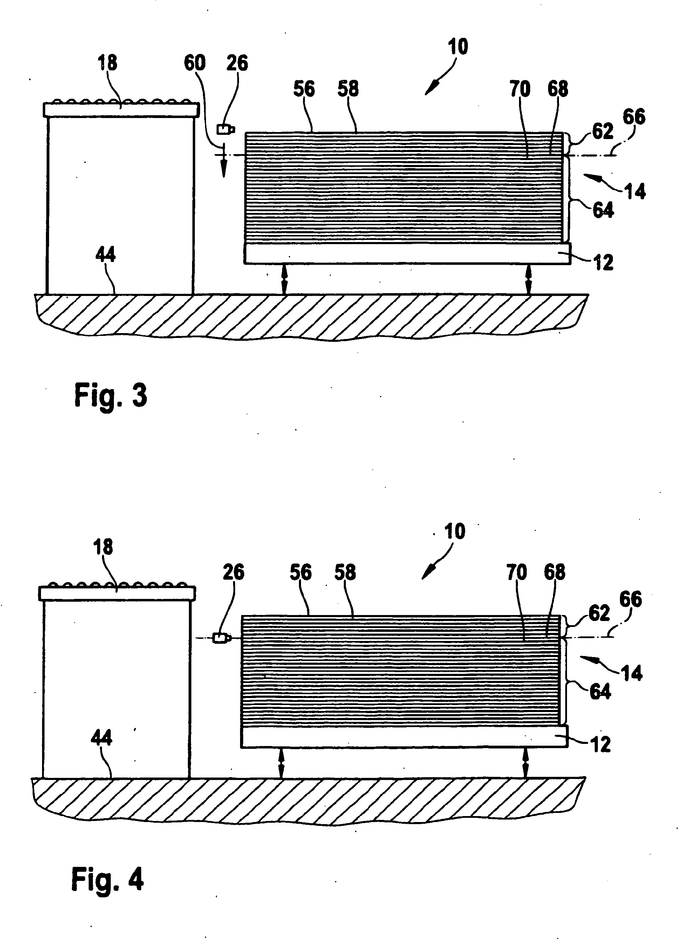

Der Betrieb der in Figur 1 dargestellten Vorrichtung 10 wird von einer Steuer- und Regeleinrichtung 54 gesteuert und geregelt. Hierzu werden über nicht dargestellte Sensoren die vertikalen Positionen des Hubtisches 12, des Trennelements 32, der Nagelgruppen 34a und 34b und der Kamera 26 erfasst und entsprechende Signale an die Steuer- und Regeleinrichtung 54 übertragen. Angesteuert werden von der Steuer- und Regeleinrichtung 54 insbesondere die Pneumatikzylinder 46, 53, 96 und 106 sowie der Spindelantrieb 42 und die Koppeleinrichtung 50. Die Vorrichtung 10 arbeitet folgendermaßen (vgl. Figur 3 bis 11) :
In der in Figur 3 dargestellten Ausgangsstellung befindet sich der Hubtisch 12 in einer unteren Stellung, welche auch als Beladestellung bezeichnet wird. Die Fördereinrichtung 16 befindet sich oberhalb des Zwischentisches 18, sie ist in den Figuren 3 bis 9 jedoch aus Übersichtlichkeitsgründen nicht gezeichnet. Die Kamera 26 wird nun in eine Position oberhalb einer Oberseite 56 einer obersten Platte 58 des Gesamtstapels 14 gefahren. Dann wird die Kamera 26 und ein zugehöriges Bilderkennungssystem aktiviert. Anschließend wird die Kamera 26 langsam nach unten gefahren (Pfeil 60 in Figur 3), bis die oberste Platte 58 erkannt wird. Das Bilderkennungssystem merkt sich diese vertikale Position der obersten Platte 58.

Die Kamera 26 wird danach weiter nach unten bewegt, wobei sie während dieser Bewegung die einzelnen Platten mittels des Bilderkennungssystems "zählt". Sobald die gewünschte Anzahl von Platten, welche abgefördert werden sollen, erreicht ist, wird die vertikale Bewegung der Kamera 26 gestoppt. Die Kamera 26 befindet sich nun im Bereich einer Trennebene zwischen einem Teilstapel 62, der abgefördert werden soll, und einem Reststapel 64, der zunächst auf dem Hubtisch 12 verbleiben soll. Die Trennebene ist in den Figuren 3 bis 8 durch eine strichpunktierte Linie angedeutet, welche das Bezugszeichen 66 trägt. Die vertikale Position dieser Trennebene 66, welche sich zwischen einer untersten Platte 68 des Teilstapels 62 und einer obersten Platte 70 des Reststapels 64 befindet, wird erfasst und in der Steuer- und Regeleinrichtung 54 gespeichert. Die entsprechende Kameraposition ist in Figur 4 dargestellt.

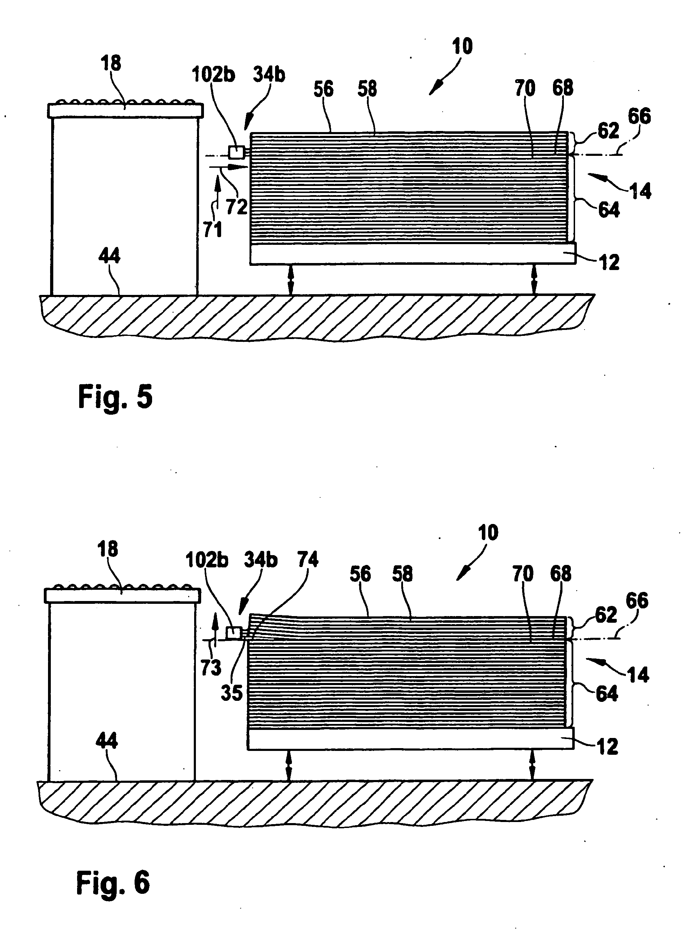

Nun wird der Spindelantrieb 42 so angesteuert, dass sich der zweite Schlitten 40 nach oben bewegt. Hierdurch drückt er den auf ihm lose sitzenden ersten Schlitten 36 und das an diesem befestigte Trennelement 32 sowie die Nagelgruppen 34a und 34b ebenfalls nach oben bis auf Höhe der Trennebene 66 (Pfeil 71 in Figur 5). Dann wird der Pneumatikzylinder 106 so angetrieben, dass die Nagelelemente 35 der Nagelgruppen 34a und 34b seitlich in die unterste Platte 68 und einige direkt oberhalb von dieser liegende Platten des Teilstapels 62 eingetrieben werden (Pfeil 72 in Figur 5). Dadurch, dass die Nagelelemente der Nagelgruppe 34b etwas höher angeordnet sind als jene der Nagelgruppe 34a, ist sichergestellt, dass die Nagelelemente 35 der Nagelgruppe 34b nicht aufgrund von Welligkeiten des Gesamtstapels 14 in Platten eingetrieben werden, die nicht zum Teilstapel 62 gehören.

Der Weg (ungefähr 6 mm), um den die Nagelelemente 35 in die unteren Platten des Teilstapels 62 eingetrieben werden, entspricht ungefähr der Dicke eines Sägeblattes der nachgeschalteten Sägeeinrichtung. Nun wird der Pneumatikzylinder 96 aktiviert, wodurch der Vertikalschlitten 94 zusammen mit den beiden Horizontalschlitten 102a und 102b und den in den Teilstapel 62 eingetriebenen Nagelelementen 35 der beiden Nagelgruppen 34a und 34b vertikal nach oben bewegt werden (Pfeil 73 in Figur 6). Hierdurch wird ein Spalt 74 zwischen Teilstapel 62 und Reststapel 64 erzeugt.

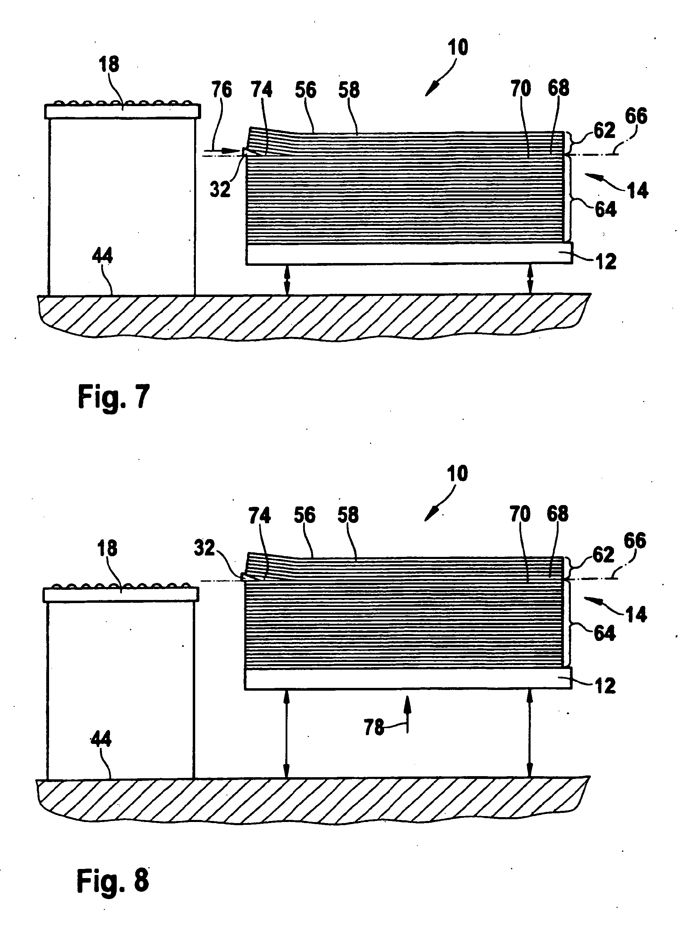

Im vorliegenden Ausführungsbeispiel wird nun mittels der Kamera 26 und des Bilderkennungssystems geprüft, ob durch die Bewegung 73 des Vertikalschlittens 94 zwischen der untersten Platte 68 des Teilstapels 62 und der obersten Platte 70 des Reststapels 64 der Spalt 74 tatsächlich gebildet ist. Wenn ja, wird der Pneumatikzylinder 46 aktiviert, wodurch das Trennelement 32 in den Spalt 74 eingeschoben wird (Pfeil 76 in Figur 7). Die Nagelelemente 35 der Nagelgruppen 34a und 34b werden dann in Gegenrichtung des Pfeils 72 aus dem Teilstapel 62 herausgezogen und entgegen der Richtung des Pfeils 73 nach unten bewegt.

Im vorliegenden Ausführungsbeispiel fährt jetzt zur Kontrolle die Kamera 26 zunächst wieder hoch bis oberhalb der Oberseite 56 der obersten Platte 58 und dann wieder nach unten bis zum Spalt 74, wobei sie während der Bewegung nach unten die Anzahl der Platten bis zum Spalt 74 zählt. Wird eine Abweichung gegenüber der vorigen Zählung festgestellt und ist diese größer als eine bestimmte Toleranz, wird diese Kontrollzählung wiederholt. Gibt es erneut eine identische Abweichung, kann man davon ausgehen, dass das Trennelement 32 an der falschen Stelle sitzt. Dann kann man beispielsweise das Trennelement 32 aus dem Spalt 74 herausziehen und den ganzen Vorgang wiederholen.

Möglich ist auch, das Trennelement 32 aus dem Spalt 74 herauszuziehen, die Nagelelemente 35 entsprechend der Abweichung neu zu positionieren und seitlich in den Teilstapel 62 einzutreiben und dann das Trennelement 32 durch eine Betätigung des Pneumatikzylinder 46 in den dann neu gebildeten Spalt einzuschieben. Werden bei einer nochmaligen Kontrolle unterschiedliche Abweichungen der Stückzahl der Platten des Teilstapels 62 von einem Sollwert festgestellt, kann entweder ein Hinweis an den Bediener der Vorrichtung 10 erfolgen mit der Aufforderung, die Kamera 26 zu reinigen, die Platten des Gesamtstapels 14 zu inspizieren, etc., oder es kann ein Hinweis an den Bediener erfolgen, den Vorgang manuell durchzuführen, oder es kann das Verfahren fortgeführt werden mit einer korrigierten Anzahl von Platten innerhalb des Teilstapels 62.

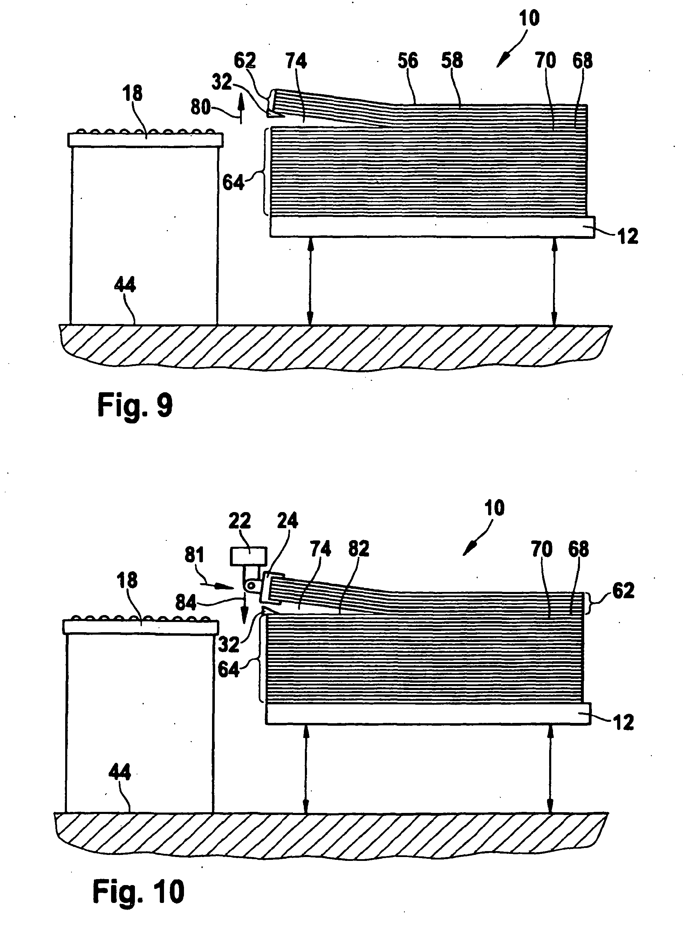

Das Verfahren wird fortgeführt, indem der Hubtisch 12 so weit angehoben wird (Pfeil 78 in Figur 8), bis die Trennebene 66 auf Höhe des Zwischentischs 18 liegt. Hierdurch wird das Trennelement 32 mit dem ersten Schlitten 36 ebenfalls nach oben gezogen, der erste Schlitten 36 hebt also vom zweiten Schlitten 40 ab. Anschließend wird die Koppeleinrichtung 50 aktiviert, wodurch der erste Schlitten 36 mit der Kolbenstange 52 gekoppelt ist. Durch eine Aktivierung des Pneumatikzylinders 53 wird die Kolbenstange 52 nach oben bewegt. Hierdurch werden auch der Schlitten 36 und mit ihm das Trennelement 32 nach oben bewegt, entsprechend Pfeil 80 in Figur 9. Auf diese Weise wird der Spalt 74 zwischen dem Teilstapel 62 und dem Reststapel 64 vergrößert.

Jetzt wird der Förderbalken 22 zum Teilstapel 62 hin bewegt, so dass die (in Förderrichtung 28 gesehen unmittelbar seitlich von den Nagelgruppen 34a und 34b angeordneten) Spannzangen 24 am Teilstapel 62 angreifen können (die Bewegung des Förderbalkens 22 und der Spannzangen 24 ist in Figur 10 durch einen Pfeil mit dem Bezugszeichen 81 bezeichnet). Die Spannzangen 24 bleiben jedoch zunächst noch geöffnet. Durch eine Deaktivierung der Koppeleinrichtung 50 wird die Verbindung zwischen dem ersten Schlitten 36 und der Kolbenstange 52 des Pneumatikzylinders 53 gelöst. Hierdurch sinkt der Schlitten 36 mit dem Trennelement 32 auf Grund der Schwerkraft nach unten, bis das Trennelement 32 auf der Oberseite 82 der obersten Platte 70 des Reststapels 64 zum Liegen kommt (Pfeil 84 in Figur 10).

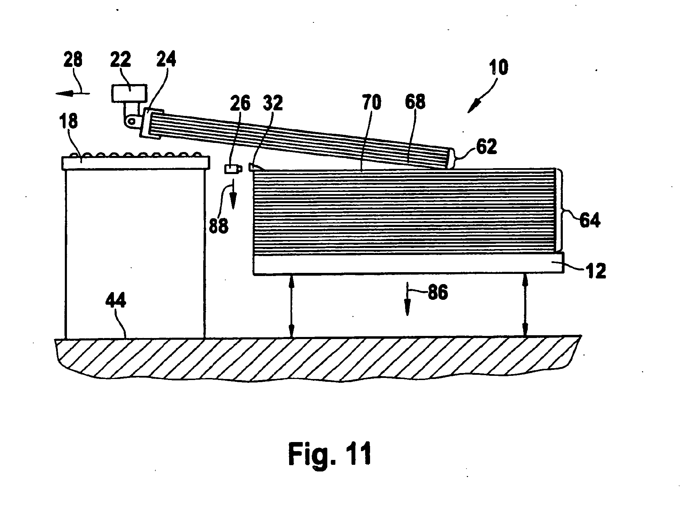

Anschließend wird der Förderbalken 22 mit den Spannzangen 24 in Förderrichtung (Pfeil 28 in Figur 11) bewegt und hierdurch der Teilstapel 62 vom Reststapel 64 abgefördert. Die oberste Platte 70 des Reststapels 64 wird durch das Trennelement 32, welches auf der obersten Platte 70 aufliegt, zurückgehalten. Gleichzeitig wird der Hubtisch 12 etwas abgesenkt (Pfeil 86 in Figur 11). Während der Förderbewegung des Förderbalkens 22 beginnt die Kamera 26 mit dem Abzählen der Platten für den nächsten Fördervorgang (Pfeil 88 in Figur 11).

In der obigen Beschreibung und in den Patentansprüchen wird durchgehend der Begriff "Nagelelement" verwendet. Hierdurch soll lediglich eine bestimmte Grundwirkung des verwendeten Elements zum Ausdruck gebracht werden. Diese Grundwirkung gilt jedoch für alle Einrichtungen, welche eine kraftschlüssige Kopplung eines seitlichen Bereichs eines abzustapelnden Teilstapels mit einem vertikal antreibbaren Element und hierdurch die Möglichkeit der Erzeugung eines mindestens lokalen Spalts zwischen Teilstapel und Reststapel umfassen.

## Patentansprüche

1. Vorrichtung (10) zum Separieren, insbesondere Abfördern eines Teilstapels (62) mit mindestens einer großformatigen Platte von einem Reststapel (64) mit einer Mehrzahl großformatiger Platten, wobei sie mindestens ein im Wesentlichen horizontales und spitz zulaufendes Nagelelement (35) umfasst, welches horizontal bewegt und hierdurch seitlich unmittelbar unter oder in eine unterste Platte (68) des Teilstapels (62) eingetrieben und dann so nach oben bewegt werden kann, dass mindestens örtlich ein Spalt (74) zwischen Teilstapel (62) und Reststapel (64) erzeugt wird, und wobei sie mindestens ein vorzugsweise keilförmiges Trennelement (32) umfasst, welches in den erzeugten Spalt (74) horizontal einschiebbar ist, **dadurch gekennzeichnet, dass** das Nagelelement (35) bei in den Spalt (74) eingeschobenem Trennelement (32) aus dem Teilstapel (62) herausziehbar ist.

2. Vorrichtung (10) nach Anspruch 1, **dadurch gekennzeichnet, dass** das Nagelelement (35) eine keilförmig angeschrägte Spitze (104) aufweist.

3. Vorrichtung (10) nach einem der Ansprüche 1 oder 2, **dadurch gekennzeichnet, dass** der Weg, um den das Nagelelement (35) unter oder in die unterste Platte (68) des Teilstapels (62) eingetrieben werden kann, höchstens ungefähr der Dicke eines Sägeblatts einer der Vorrichtung (10) nachgeschalteten Säge entspricht.

4. Vorrichtung (10) nach einem der vorhergehenden Ansprüche, **dadurch gekennzeichnet, dass** sie eine Mehrzahl von Nagelelementen (35) umfasst, die vorzugsweise in einer Mehrzahl von wenigstens im Wesentlichen horizontalen und zueinander versetzten Reihen angeordnet sind.

5. Vorrichtung (10) nach Anspruch 4, **dadurch gekennzeichnet, dass** die Mehrzahl von Nagelelementen (35) in separaten Gruppen (34a, 34b) auf jeweiligen Trägerelementen (102a, 102b) angeordnet sind.

6. Vorrichtung (10) nach einem der vorhergehenden Ansprüche, **dadurch gekennzeichnet, dass** sie eine Kamera (26) zur Erfassung einer Trennebene (66) zwischen Teilstapel (62) und Reststapel (64) umfasst, und dass ein zweites Nagelelement (34b), welches von der Kamera (26) weiter entfernt ist als ein erstes Nagelelement (34a), gegenüber Letzterem etwas höher angeordnet ist.

7. Vorrichtung (10) nach einem der vorhergehenden Ansprüche, **dadurch gekennzeichnet, dass** das Nagelelement (35) und/oder das Trennelement (32) an einem ersten vertikal verschieblichen Schlitten (36) wenigstens mittelbar befestigt ist, der wenigstens zeitweise auf einem zweiten vertikal verschieblichen Schlitten (40) frei aufsitzt, der mit einer Stelleinrichtung (42) gekoppelt ist.

8. Vorrichtung (10) nach Anspruch 7, **dadurch gekennzeichnet, dass** der erste Schlitten (36) eine schaltbare Koppeleinrichtung (50) aufweist, mittels der er mit einem vertikal verstellbaren Stellelement (52) koppelbar ist.

9. Vorrichtung (10) nach einem der vorhergehenden Ansprüche, **dadurch gekennzeichnet, dass** sie eine Greifeinrichtung (24) umfasst, die den Teilstapel (62) unter Benützung des erzeugten Spalts (74) greift und abfördert.

10. Vorrichtung (10) nach Anspruch 9, **dadurch gekennzeichnet, dass** das Nagelelement (35) im Bereich einer in Förderrichtung (28) gesehen vorderen Stirnseite (27) des Teilstapels (62) und des Reststapels (64) angeordnet ist, und dass die Greifeinrichtung (24) an dem vorderen Rand des Teilstapels (62) angreift.

11. Verfahren zum Separieren, insbesondere Abfördern eines Teilstapels (62) mit mindestens einer großformatigen Platte von einem Reststapel (64) mit einer Mehrzahl großformatiger Platten, **dadurch gekennzeichnet, dass** es folgende Schritte umfasst:
• Eintreiben (72) mindestens eines Nagelelements (35) seitlich unmittelbar unter oder in eine unterste Platte (68) des Teilstapels (62);
• nach oben Bewegen (73) des Nagelelements (35) zusammen mit einem Bereich des Teilstapels (62), so dass mindestens ein lokaler Spalt (74) zwischen Teilstapel (62) und Reststapel (64) erzeugt wird;
• Horizontales Einschieben (76) eines Trennelements (32) in den erzeugten mindestens lokalen Spalt (74);
• Herausziehen des Nagelelements (35) aus dem Teilstapel (62).

12. Verfahren nach Anspruch 11, **dadurch gekennzeichnet, dass** das Trennelement (32) oberhalb der unteren Begrenzung (82) des erzeugten lokalen Spalts (74) eingeschoben wird (72).

13. Verfahren nach einem der Ansprüche 11 oder 12, **dadurch gekennzeichnet, dass** es nach dem Einschieben (76) des Trennelements (32) und dem Herausziehen des Nagelelements (35) aus dem Teilstapel (62) den folgenden Schritt umfasst:
• Vertikales Verschieben (80) des Trennelements (32) nach oben.

14. Verfahren nach einem der Ansprüche 11 bis 13, **dadurch gekennzeichnet, dass** es folgenden Schritt umfasst:
• Ergreifen und Abfördern (28) des Teilstapels (62) unter Benützung des erzeugten Spalts (74);
• Absenken (84) des Trennelements (32) auf die Oberseite (82) des Reststapels (64).

## Claims

1. A device (10) for separating, in particular conveying away a partial stack (62), having at least one plate of large format, from a remaining stack (64) having a plurality of plates of large format, wherein it includes at least one substantially horizontal nail element (35) extended to form a point, which can be horizontally moved and thereby introduced laterally directly underneath or into a lowermost plate (68) of the partial stack (62), and can thereafter be moved upward in such a way that a gap (74) is created, at least locally, between a partial stack (62) and a remaining stack (64), and wherein it includes at least one, preferably wedge-shaped, separating element (32), which can be horizontally pushed into the created gap (74), **characterized in that**, with the separating element (32) pushed into the gap (74), the nail element (35) can be pulled out of the partial stack (62).

2. The device (10) in accordance with claim 1, **characterized in that** the nail element (35) has a tip (104), which is beveled in the shape of a wedge.

3. The device (10) in accordance with one of claims 1 or 2, **characterized in that** the distance, by which the nail element (35) can be introduced underneath or into the lowermost plate (68) of the partial stack (62), corresponds at most to the thickness of a saw blade of a saw located downstream of the device (10).

4. The device (10) in accordance with one of the preceding claims, **characterized in that** it contains a plurality of nail elements (35), which are preferably arranged in a plurality of substantially horizontal rows and are offset in respect to each other.

5. The device (10) in accordance with claim 4, **characterized in that** the plurality of nail elements (35) is arranged in separate groups (34a, 34b) on respective support elements (102a, 102b).

6. The device (10) in accordance with one of the preceding claims, **characterized in that** it contains a camera (26) for detecting a plane (66) of separation between the partial stack (62) and the remaining stack (64), and that a second nail element (34b), which is arranged farther away from the camera (26) than a first nail element (34a), is arranged slightly higher than the latter.

7. The device (10) in accordance with one of the preceding claims, **characterized in that** the nail element (35) and/or the separating element (32) are at least indirectly fastened to a first, vertically displaceable carriage (36), which is freely seated, at least for a time, on a second, vertically displaceable carriage (40), and is coupled to a placement device (42).

8. The device (10) in accordance with claim 7, **characterized in that** the first carriage (36) has a switchable coupling device (50), by means of which it can be coupled with a vertically adjustable placement element (52).

9. The device (10) in accordance with one of the preceding claims, **characterized in that** it includes a gripper arrangement (24), which grips the partial stack (62), making use of the created gap (74), and conveys it away.

10. The device (10) in accordance with claim 9, **characterized in that** the nail element (35) is arranged, viewed in the conveying direction (28), in the area of a front side (27) of the partial stack (64), and that the gripper arrangement (24) acts on the front edge of the partial stack (62).

11. A method for separating, in particular conveying away, a partial stack (62), having at least one plate of large format, from a remaining stack (64), having a plurality of plates of large format, **characterized in that** it includes the following steps:
• introduction (72) of at least one nail element (35) laterally directly underneath or into a plate (68) of the partial stack (62);
• upward movement (73) of the nail element (35) together with a section of the partial stack (62), so that at least one local gap (74) is created between the partial stack (62) and the remaining stack (64);
• horizontal insertion (76) of a separating element (32) into the at least one local gap (74) created;
• pulling the nail element (35) out of the partial stack (62).

12. The method in accordance with claim 11, **characterized in that** the separating element (32) is pushed in (72) above the lower limitation (82) of the created local gap (74).

13. The method in accordance with one of claims 11 or 12, **characterized in that**, following the insertion (76) of the separating element (32) and the pulling of the nail element (35) out of the partial stack (62), it includes the following step:
• vertical displacement (80) of the separating element (32) upward.

14. The method in accordance with one of claims 11 to 13, **characterized in that** it includes the following steps:
• gripping and conveying away (28) of the partial stack (62), making use of the created gap (74);
• lowering (84) of the separating element (32) to the top (82) of the remaining stack (64).

## Revendications

1. Dispositif (10) pour la séparation, en particulier pour l'évacuation d'une pile partielle (62) avec au moins un plateau de grand format à partir d'une pile restante (64) avec une pluralité de plateaux de grand format, ledit dispositif comportant au moins un élément en forme de clou (35) sensiblement horizontal et se terminant en pointe, lequel est déplacé horizontalement et, de ce fait, est enfoncé latéralement directement en dessous ou dans un plateau inférieur (68) de la pile partielle (62) et peut alors être déplacé vers le haut, de manière à générer au moins localement une fente (74) entre la pile partielle (62) et la pile restante (64), et ledit dispositif comportant au moins un élément séparateur (32) de préférence en forme de clavette qui peut être introduit horizontalement dans la fente (74) générée, **caractérisé en ce que** l'élément en forme de clou (35) peut être tiré hors de la pile partielle (62) lorsque l'élément séparateur (32) est inséré dans la fente (74).

2. Dispositif (10) selon la revendication 1, **caractérisé en ce que** l'élément en forme de clou (35) est muni d'une pointe (104) chanfreinée en forme de clavette.

3. Dispositif (10) selon la revendication 1 ou 2, **caractérisé en ce que** la distance sur laquelle l'élément en forme de clou (35) peut être enfoncé dans le plateau inférieur (68) de la pile partielle (62) correspond au maximum à peu près à l'épaisseur d'une lame d'une scie montée en aval du dispositif (10).

4. Dispositif (10) selon l'une quelconque des revendications précédentes, **caractérisé en ce qu'**il comporte une pluralité d'éléments en forme de clou (35) qui sont agencés de préférence en une pluralité de rangées au moins sensiblement horizontales et décalées les unes par rapport aux autres.

5. Dispositif (10) selon la revendication 4, **caractérisé en ce que** la pluralité d'éléments en forme de clou (35) est agencée en groupes (34a, 34b) séparés sur des éléments support (102a, 102b) respectifs.

6. Dispositif (10) selon l'une quelconque des revendications précédentes, **caractérisé en ce qu'**il comporte une caméra (26) destinée à enregistrer un plan de séparation (66) entre une pile partielle (62) et une pile restante (64), et **en ce qu'**un deuxième élément en forme de clou (34b), qui est davantage éloigné de la caméra (26) qu'un premier élément en forme de clou (34a), est agencé quelque peu plus haut que ce dernier.

7. Dispositif (10) selon l'une quelconque des revendications précédentes, **caractérisé en ce que** l'élément en forme de clou (35) et/ou l'élément séparateur (32) sont fixés au moins indirectement sur un premier chariot (36) mobile verticalement, lequel repose librement au moins de temps en temps sur un deuxième chariot (40) mobile verticalement, lequel est couplé à un dispositif de réglage (42).

8. Dispositif (10) selon la revendication 7, **caractérisé en ce que** le premier chariot (36) comporte un dispositif de couplage (50) commutable, au moyen duquel il peut être couplé avec un élément de réglage (52) mobile verticalement.

9. Dispositif (10) selon l'une quelconque des revendications précédentes, **caractérisé en ce qu'**il comporte un dispositif de préhension (24), qui saisit et évacue la pile partielle (62) moyennant l'utilisation de la fente (74) générée.

10. Dispositif (10) selon la revendication 9, **caractérisé en ce que** l'élément en forme de clou (35) est disposé dans la zone d'une face frontale (27) avant, par référence au sens de transport (28), de la pile partielle (62) et de la pile restante (64), et **en ce que** le dispositif de préhension (24) entre en prise avec le bord avant de la pile partielle (62).

11. Procédé pour la séparation, en particulier pour l'évacuation d'une pile partielle (62) avec au moins un plateau de grand format à partir d'une pile restante (64) avec une pluralité de plateaux de grand format, **caractérisé en ce qu'**il comporte les étapes suivantes :
• enfoncement (72) d'au moins un élément en forme de clou (35) latéralement directement en dessous ou dans un plateau inférieur (68) de la pile partielle (62) ;
• déplacement (73) vers le haut de l'élément en forme de clou (35) conjointement avec une zone de la pile partielle (62), de telle sorte qu'au moins une fente (74) locale est générée entre la pile partielle (62) et la pile restante (64) ;
• introduction horizontale (76) d'un élément séparateur (32) dans la fente (74) générée au moins localement ;
• extraction de l'élément en forme de clou (35) hors de la pile partielle (62).

12. Procédé selon la revendication 11, **caractérisé en ce que** l'élément séparateur (32) est introduit (72) au-dessus de la paroi inférieure (82) de la fente (74) locale générée.

13. Procédé selon la revendication 11 ou 12, **caractérisé en ce que**, après l'introduction (76) de l'élément séparateur (32) et l'extraction de l'élément en forme de clou (35) hors de la pile partielle (62), il comporte l'étape suivante :
• déplacement vertical (80) de l'élément séparateur (32) vers le haut.

14. Procédé selon l'une quelconque des revendications 11 à 13, **caractérisé en ce qu'**il comporte les étapes suivantes :
• préhension et évacuation (28) de la pile partielle (62) moyennant l'utilisation de la fente (74) générée ;
• abaissement (84) de l'élément séparateur (32) sur la face supérieure (82) de la pile restante (64).
